# EUROPEAN PATENT SPECIFICATION

(11) **EP 3 159 313 B1**
(45) Date of publication and mention of the grant of the patent: **25.03.2020**
(21) Application number: 16194335.2
(22) Date of filing: 18.10.2016
(51) Int. Cl.: C02F 1/48, B01D 35/06, B03C 1/28, B01D 35/143, C02F 1/00, C02F 103/02, F24D 19/00, F28F 19/01, C02F 101/20

(54) **MAGNETIC FILTER FOR TREATING A FLUID IN A PIPE, IN PARTICULAR OF A WATER NETWORK**
MAGNETISCHES FILTER ZUR BEHANDLUNG EINES FLUSSES IN EINER ROHRLEITUNG, INSBESONDERE EINES WASSERNETZES
FILTRE MAGNÉTIQUE POUR TRAITER UN FLUIDE DANS UN TUYAU, EN PARTICULIER D'UN RÉSEAU D'EAU

(30) Priority: 21.10.2015 IT UB201586596 U
(43) Date of publication of application: 26.04.2017
(73) Proprietor: RBM IBOX S.R.L., 25075 Nave (BS) (IT)
(72) Inventor: BOSSINI, Guido, 25123 Brescia (BS) (IT)
(74) Representative: Metroconsult Srl

(56) References cited:
- EP-A1- 2 614 893
- DE-U1- 20 105 743
- GB-A- 2 490 898
- US-A1- 2014 319 034
- US-A1- 2015 068 964

## Description

The present invention relates to a filter for treating a fluid in a piping, in particular of a water supply network, according to claim 1.

The present invention addresses, in particular, piping of heating and/or cooling systems, particularly for household and/or industrial use.

In hydronic heating and/or cooling systems, it has become increasingly common to take all possible actions aimed at keeping the heat-transfer fluid as clean as possible (which is normally water, possibly with the addition of glycol or similar substances) and free from impurities that, especially in old systems, typically have a very high concentration of ferrous particles released from system components, particularly from pipes (typically made of iron) and radiators.

Such impurities are circulated by a pump included in the system; therefore, they tend to impair the proper and efficient operation of the control elements (e.g. valve components) and also of any heat exchangers included in the generators (e.g. boilers, refrigerators, heat pumps, and so on).

If such impurities are not removed, in the long run they can reduce the efficiency of the system and lead to damage of the components thereof, e.g. said control elements, exchangers and generators.

Moreover, such impurities may lead to perforation of the pipes due to corrosion; in fact, the accumulated impurities, in contact with the oxygen that is present in water, tend to oxidize those parts of the system where they deposit and may cause corrosion of such parts, resulting in a perforated pipe.

Several techniques and method are known in the art for removing impurities from the fluid flowing in pipes of a water supply system, in particular a heating and/or cooling system.

A first method requires the use of chemical additives that neutralize said impurities contained in the fluid; however, this technique has some important drawbacks, in that the presence of such additives must be constantly monitored and the system has to be shut down in order to add more additive when its concentration is insufficient and/or lower than required for effectively removing the impurities.

Another method uses at least one filter associated with a pipe of the water supply network, in particular of a heating and/or cooling system, said filter trapping the impurities contained in the system and being typically associated with a pipe of the return circuit of the system, for protecting the power generator (whether a heating power generator, e.g. a boiler, or a cooling power generator).

GB 2 490 898 A discloses an apparatus for central heating system that has a magnet positioned in a housing for removing magnetic particles.

US 2015/068964 A1 relates to a magnetic filtration device for separating ferrous particles from a fluid flowing within a fluid network such as central heating or air conditioning systems.

DE 20105743 U discloses a filter component integrated in a hydraulic system comprising a filter housing provided with three pipe sockets. The inner space of the housing has a cylindrical filter chamber with a hollow cylindrical filter sieve separated by an intermediate space. One end of the filter sieve is connected with the first pipe socket and the other end of the filter sieve is closed. The outer surface of the filter sieve is connected to at least one of the other pipe sockets.

It is clear that the filters normally employed for heating and cooling system protection must be periodically maintained, in particular for the purpose of removing the residues of the impurities that have accumulated after the heat-transfer fluid has flowed therethrough many times.

However, the filters known in the art have some drawbacks, since they are designed in such a way that they cannot be installed in the limited space normally left available in current heating and cooling systems for a filter for separating and removing ferrous particles from the heat-transfer fluid; it must be pointed out that this problem is particularly felt in apartments and houses where the power generator (boiler) is placed in suitable wall units that normally do not leave sufficient room for positioning a filter for separating and removing ferrous particles from the heat-transfer fluid.

A further drawback is that the filters known in the art are not versatile and do not allow an installer to easily and readily use the same filter in association with different types of power generators and different installation configurations.

Another drawback of prior-art filters is that they are so realized as to not allow one to know when said maintenance is necessary for removing the impurities that have accumulated on the at least one magnetic element of the filtering element and that impair the proper operation of the latter.

In this frame, it is the main object of the present invention to provide a filter for treating a fluid in a piping, in particular of a water supply system, which is so realized as to overcome the drawbacks of the prior art.

In particular, it is one object of the present invention to provide a filter for treating a fluid in a piping, in particular of a water supply network, which is so realized that it can be optimally installed in the limited space available in modern heating and cooling systems.

It is another object of the present invention to provide a filter for treating a fluid in a piping, in particular of a water supply network, which is versatile and which allows an installer to easily and readily use the same filter with different types of power generators and in different installation configurations.

It is another object of the present invention to provide a filter for treating a fluid in a piping, in particular of a water supply network of a heating and/or cooling system, which is so realized that it can be readily subjected to maintenance work for removing the residues of the impurities accumulated thereon after the heat-transfer fluid has flowed therethrough many times.

It is yet another object of the present invention to provide a filter for treating a fluid in a piping, in particular of a water supply network, which is so realized as to provide an indication about the quantity of impurities that have accumulated on the filtering element, in particular for the purpose of knowing when maintenance is necessary in order to remove said impurities.

Therefore, it is an object of the present invention to provide a filter, and a method of operation thereof, which are so conceived as to ensure an optimal operation of the filter and to provide the user with indications about the accumulation of impurities on the filtering element.

Said objects are achieved by the present invention through a filter for treating a fluid in a piping, in particular of a water supply network, which incorporates the features set out in the appended claims, the latter being an integral part of the present description. Further objects, features and advantages of the present invention will become apparent from the following detailed description and from the annexed drawings, which are supplied by way of non-limiting explanatory example, wherein:
- Figure 1 is a sectional view of the filter for treating a fluid in a piping, in particular of a water supply network, according to the present invention;
- Figure 2 is a partially exploded sectional view of the filter according to the present invention;
- Figures. 3a, 3b and 3c show a perspective view of the filter according to the present invention in a first, a second and a third working conditions, respectively.

In the annexed drawings, reference numeral 1 designates as a whole a filter for treating a fluid in a piping (not shown in the annexed drawings), in particular of a water supply network, according to the present invention. In particular, said water supply network consists of a heating and/or cooling system.

In particular, said filter 1 is defined in appended claim 1 and comprises:
- a main body 10 comprising at least one internal chamber 10A;
- a filtering element (designated as a whole by reference numeral 20) for treating the fluid, said filtering element 20 being housed at least partially in said chamber 10A.

In accordance with the present invention, the main body 10 comprises a first mouth 11, a second mouth 12 and a third mouth 13, which have the same shape.

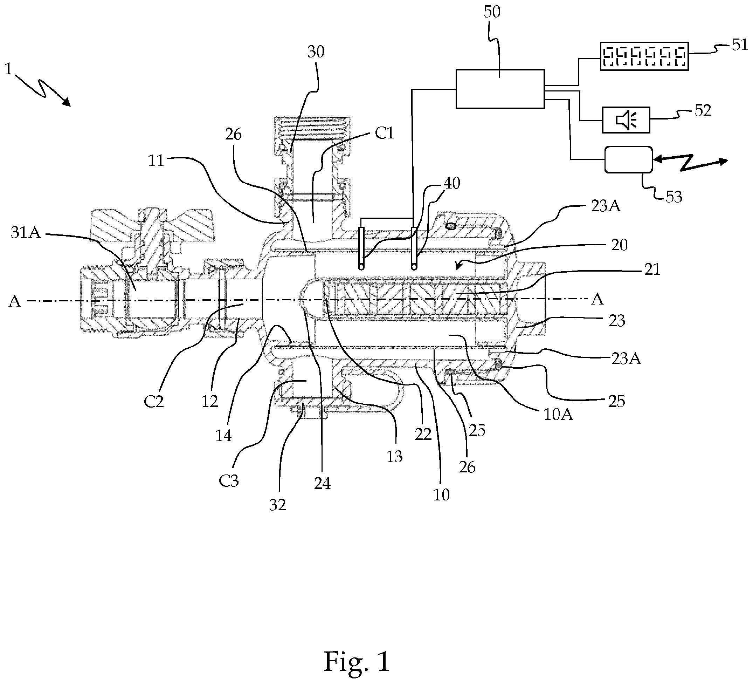

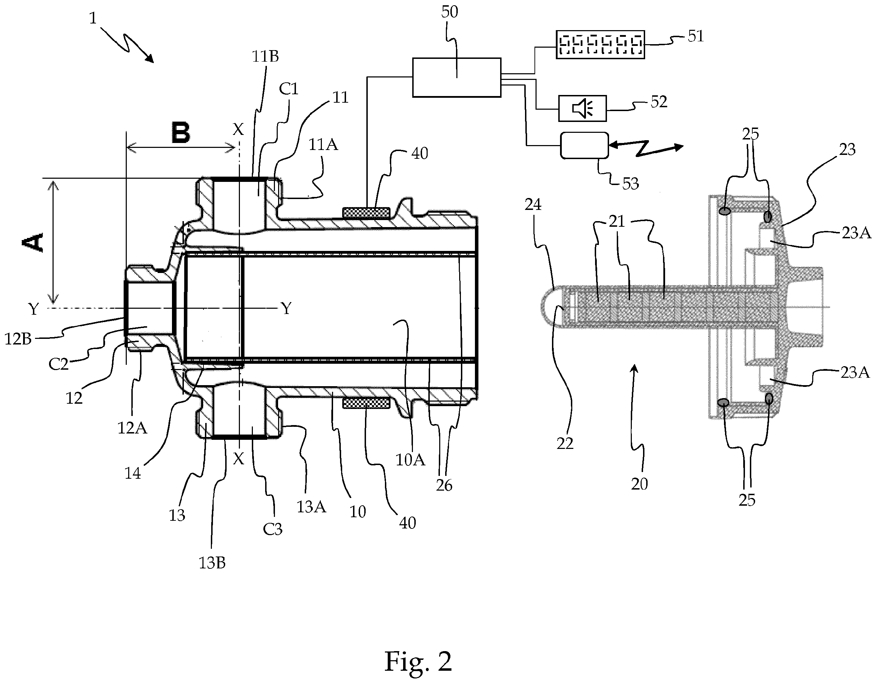

As can be seen in Figures 1 and 2, said first mouth 11, second mouth 12 and third mouth 13 comprise, respectively, a first duct C1, a second duct C2 and a third duct C3, which allow the fluid to enter and/or exit the chamber 10A.

In particular, a first side 11A of the first mouth 11, a second side 12A of the second mouth 12 and a third side 13A of the third mouth 13 are made in the same manner in terms of dimensions and shape; it should be noted that, in the present description, the term "side" will refer to that surface of the mouths 11, 12, 13 which is opposite to that which faces the first duct C1, the second duct C2 and the third duct C3, respectively.

Moreover, the first mouth 11, the second mouth 12 and the third mouth 13 comprise corresponding connection means; for example, said connection means may consist of identical threads on the sides 11A, 12A, 13A of said first mouth 11, second mouth 12 and third mouth 13.

In a preferred embodiment, the first mouth 11, the second mouth 12 and the third mouth 13 are positioned on the main body 10 in such a way as to lie in substantially the same longitudinal plane, said longitudinal plane being parallel to a longitudinal axis A-A (visible in Fig. 1) of the filter 1; this feature of the mouths 11, 12, 13 can be observed in Figures 1 and 2, which show a longitudinal section of the filter 1, i.e. according to a longitudinal plane parallel to said longitudinal axis A-A of the filter 1.

According to the invention the first mouth 11 and the third mouth 13 are positioned on the main body 10 on opposite sides relative to the chamber 10A and in such a way as to have first longitudinal axes X substantially coinciding with each other (note that said first longitudinal axes X are substantially perpendicular to said longitudinal axis A-A of the filter 1); therefore, in the sectional view of Fig. 2, the first longitudinal axes X of the first mouth 11 and third mouth 13 are obviously represented as one axis X.

According to the invention the second mouth 12 is positioned on the main body 10 in such a way as to have a second longitudinal axis Y substantially perpendicular to the first longitudinal axes X of the first mouth 11 and third mouth 13; therefore, the second longitudinal axis Y is substantially parallel to said longitudinal axis A-A of the filter 1, and may also coincide with said longitudinal axis A-A.

In a preferred embodiment (shown in Fig. 2), the first mouth 11, the second mouth 12 and the third mouth 13 are positioned on the main body 10 in such a way that the ratio between:
- a first distance A, measured between the second axis Y and a straight line passing through a first inlet section 11B of the first mouth 11, and
- a second distance B, measured between the first axis X and a straight line passing through a second inlet section 12B of the second mouth 12,
lies within a range of values from a minimum value of 0.8 to a maximum value of 1.2, in particular said first distance A and second distance B being shorter than 50 mm.

It is clear that said distance A may also be a distance between the second axis Y and a straight line passing through a third inlet section 13B of the third mouth 13. Furthermore, said distance B may also be a distance between the first axis X of the third mouth 13 and a straight line passing through said second inlet section 12B of the second mouth 12, since the first mouth 11 and the third mouth 13 have substantially coinciding first longitudinal axes X.

According to the invention the main body 10 has a substantially cylindrical shape; the first mouth 11 and third mouth 13 are located on the side surface of the main body 10, whereas the second mouth 12 is located at one end (or base) of the substantially cylindrical main body 10.

The peculiar features of the filter 1 according to the present invention make said filter 1 suitable for optimal installation in the limited space available in modern heating and cooling systems.

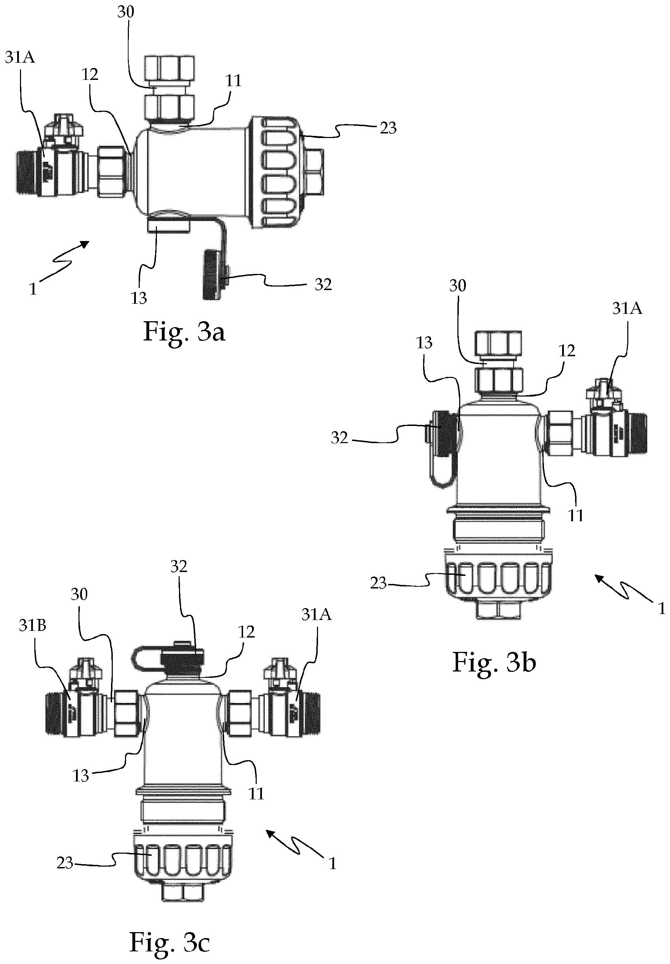

In fact, as can be observed in Figures 3a to 3c, the filter 1 according to the present invention can be indifferently used:
- in a first configuration (shown in Figures 1 and 3a), wherein the first mouth 11 is associated with a duct 30 (in particular for delivering the fluid towards a power generator, not shown), the second mouth 12 is associated with a first intercepting valve 31A that allows stopping the flow of fluid towards the filter 1, the third mouth 13 is associated with a closing element 32 (which in Fig. 3a is shown in a condition in which it leaves the third mouth 13 open, i.e. a condition in which the fluid can be drained from a power generator and/or system through the third mouth 13);
- in a second configuration (shown in Fig. 3b), wherein the first mouth 11 is associated with the first intercepting valve 31A, which allows stopping the flow of fluid towards the filter 1, the second mouth 12 is associated with the duct 30 for delivering the fluid towards a power generator, the third mouth 13 is associated with the closing element 32;
- in a third configuration (shown in Fig. 3c), wherein the first mouth 11 is associated with the first intercepting valve 31A, which allows stopping the flow of fluid towards the filter 1, the second mouth 12 is associated with the closing element 32, the third mouth 13 is associated with the duct 30 for delivering the fluid towards a power generator, wherein said duct 30 and/or third mouth 13 can be associated with a second intercepting valve 31B.

It should be noted that in the first configuration (Fig. 3a) the filter 1 and the filtering element 20 are positioned substantially horizontally, whereas in the second and third configurations (Figs. 3b and 3c) they are directed substantially downwards.

Therefore, the provisions of the present invention allow providing a filter 1 that turns out to be very versatile, in that such provisions will allow an installer to easily and readily use the filter 1 with different types of power generators and in different installation configurations.

Referring again to Figures 1 and 2, it can be observed that the filter element 20 comprises at least one magnetic element 21 housed at least partially in said chamber 10A and adapted to intercept and trap any ferrous impurities contained in the fluid to be treated.

In a preferred embodiment, the filtering element 20 has a substantially rod-like shape; preferably, said filtering element 20 comprises a plurality of magnetic elements 21, in particular associated with one another in such a way as to form said substantially rod-like shape.

Preferably, the filtering element 20 comprises also the following elements:
- a magnet cartridge 22 adapted to house said at least one magnetic element 21;
- a plug 23 adapted to be secured to the main body 10;
- a sheath 24 adapted to house the magnet cartridge 22 and to be coupled to the plug 23.

In particular, the magnet cartridge 22 and the sheath 24 extend (or develop) in such a way as to allow positioning said at least one magnetic element 21 within the chamber 10A of the main body 10.

Moreover, said sheath 24 is removable, since it can be separated from said magnet cartridge 22 and/or from at least one magnetic element 21 and from the plug 23; also, it is preferably made of plastic material.

The fact that the sheath 24 can be removed facilitates the cleaning of the ferrous residues captured by said at least one magnetic element 21, which cleaning would otherwise be difficult to carry out because of the considerable intensity of the magnetic field generated by said at least one magnetic element 21.

Preferably, the filter 1 according to the present invention comprises at least one sealing element 25 (e.g. a gasket) positioned between the plug 23 and the main body 10 to prevent any leakage of fluid from the filter 1.

In particular, the plug 23 is screwed to the main body 10 with the interposition of a pair of sealing elements 25.

As previously described, the main body 10 has a substantially cylindrical shape; in this embodiment, the plug 23 is secured in correspondence of one end of the main body 10, opposite to that with which the second mouth 12 is associated, in particular said plurality of magnetic elements 21 being so arranged as to develop or extend parallel to a longitudinal axis A-A of the filter 1.

The particular provisions of the filtering element 20 according to the present invention allow providing a filter 1 for treating a fluid, in particular in a water supply network, which is so designed as to allow an optimal removal of the impurities contained in a fluid flowing in said water supply network, while also facilitating the maintenance necessary for removing the residues of the impurities accumulated after the heat-transfer fluid has flowed therethrough many times.

It must be pointed out that the filter 1 according to the present invention may also comprise a second filtering element 26, in particular of the mesh type, positioned in the chamber 10A; in particular, said second filtering element 26 allows subjecting the fluid to an additional filtering action in order to trap non-ferromagnetic impurities that might escape the action of the magnetic field exerted by the magnetic filtering element 20.

In a preferred embodiment, said second filtering element 26 is so realized as to have a substantially tubular shape.

Preferably, the second filtering element 26 is so arranged as to surround the inlet portion of the second duct C2 in the chamber 10A and to extend parallel to the longitudinal axis A-A (visible in Fig. 1) of the filter 1 until it comes in contact with the plug 23; in particular, the second filtering element 26 is so positioned as to embrace or contain the assembly made up of the filtering element 20, the magnet cartridge 22 and the sheath 24.

Advantageously, the main body 10 comprises a wall 14 that surrounds the inlet portion of the second duct C2 in the chamber 10A and extends parallel to the longitudinal axis A-A of the filter 1, so as to mate with a tract of the second filtering element 26 and allow it to be correctly positioned within the chamber 10A.

In particular, also the wall 14 is substantially tubular in shape and may have:
- a slightly smaller section (as shown in Fig. 1) than that of the second filtering element 26, so that it can be inserted into an initial tract of the second filtering element 26, or
- a slightly larger section (as shown in Fig. 2) than that of the second filtering element 26, so that it can be slipped over the initial tract of the second filtering element 26.

Moreover, the plug 23 is preferably so shaped as to comprise a recess 23A (in particular having a substantially circular shape in a front view, i.e. when viewed in a direction parallel to the axis A-A of the filter 1), which is adapted to house a terminal portion of the second filtering element 26 and allow it to be correctly positioned within the chamber 10A, in particular in cooperation with the wall 14.

In a preferred embodiment, the filter 1 comprises at least one magnetic detector 40 associated with said main body 10 for detecting the magnetic field generated by said at least one magnetic element 21.

In addition, the filter 1 according to the present invention may comprise a control unit 50 associated with said at least one magnetic detector 40, said control unit 50 being adapted to process the magnetic field information received from said at least one magnetic detector 40 and to provide an indication about the quantity of impurities that have accumulated on the filtering element 20.

In a first embodiment, said at least one magnetic detector 40 may consist of at least one magnetic switch adapted to detect the state of the magnetic field generated by said at least one magnetic element 21; alternatively and in accordance with a second embodiment, said at least one magnetic detector 40 may consist of at least one magnetic sensor adapted to measure the magnetic field generated by said at least one magnetic element 21.

Furthermore, said at least one magnetic detector 40 may be at least partially inserted in the chamber 10A, as shown in the embodiment example of Fig. 1; as an alternative, said at least one magnetic detector 40 may be associated with an outer portion or surface of the main body 10, as in the embodiment example shown in Fig. 2, wherein said at least one magnetic detector 40 is so positioned as to surround and substantially encircle the outer surface of the main body 10, and in particular said at least one magnetic detector 40 may have a substantially arched or annular shape.

Figures 1 and 2 also show that the filter 1 preferably comprises a first signalling device 51 of the video type and/or a second signalling device 52 of the audio type associated with said control unit 50, wherein at least one of said signalling devices 51, 52 is activated by the control unit 50 in order to provide a user with an indication about the quantity of impurities that have accumulated on the filtering element 20. In particular, said indication may be provided as an alarm signal (of the visual type, when issued by the first signalling device 51, and/or of the audible type, when issued by the second signalling device 52) when the quantity of impurities that have accumulated on the filtering element 20 is such as to require maintenance of the filter 1 in order to remove the impurities.

In addition, the filter 1 according to the present invention preferably comprises transmission/reception means 53 associated with said control unit 50 and adapted to:
- send the indication, processed by said control unit 50, about the quantity of impurities that have accumulated on the filtering element 20 to a remote station (not shown in the drawings), and/or
- respond at any time to an interrogation from said remote station to provide the indication processed by the control unit 50, and/or
- receive instructions from said remote station.

Said remote station, which may be an integral part of a power generator with which the filter 1 is associated, or which may consist of a portable terminal, can thus acquire the indications processed by the control unit 50 pertaining to the clogging condition of the filter 1 and hence decide what actions to take, which may consist of a notification integrated with an external application (via messaging, e-mail, etc.), sending of specific instructions to the transmission/reception means 53 and to the control unit 50 (e.g. instructions for stopping the power generator before the filter 1 becomes totally clogged), and so on.

Preferably, the control unit 50 is associated with power supply means (not shown in the annexed drawings), which may consist, for example, of a battery; furthermore, said at least one magnetic detector 30, the control unit 50, the first signalling device 51 of the video type, the second signalling device 52 of the audio type and the transmission/reception means 53 are preferably mounted on a structure (not shown in the annexed drawings) that may be formed directly on the outer portion or surface of the main body 10 or may be associated with said outer portion or surface of the main body 10.

The peculiar characteristics of said at least one magnetic detector 40 and of the control unit 50 according to a preferred embodiment of the present invention allow realizing a filter 1 that operates in an optimal manner, since the magnetic detector 40 and the control unit 50 continuously provide a user with accurate indications about the accumulation of impurities on the filtering element 20. It is therefore clear that the user, thanks to said indications, is put in a condition to understand when maintenance work is needed for removing the impurities from the filtering element 20 and to readily take action in order to restore the filter 1 to its optimal operating condition.

In a preferred embodiment, the filter 1 comprises a plurality of magnetic detectors 40 associated with said main body 10, in particular said megnetometers 40 being positioned at different distances from said at least one magnetic element 21 of the filtering element 20. This provision ensures a more accurate and reliable indication about the quantity of impurities that have accumulated on the filtering element 20. In fact, the arrangement of said magnetic detectors 40 at different distances from said at least one magnetic element 21 reveals when the geometric zone concerned by the flux lines generated by the magnetic element 21 tends to get filled with ferrous impurities and, also due to a suitable management logic included in the control unit 50, allows sending an appropriate signal to the user. For example, said signal may be provided by means of a luminous sequence generated by the first signalling device 51 of the video type (e.g. by using light sources with colours ranging from green - to indicate the absence of impurities or a low concentration thereof - to red - to indicate an excessive concentration of impurities on the filtering element 20 - possibly with a plurality of intermediate colours) and/or by means of an audible signal emitted by the second signalling device 52 of the audio type (e.g. said audible signal may be an intermittent signal and/or a signal the intensity of which increases with the impurity concentration on the filtering element 20). In addition, said signalling may consist of sending to a remote station the indication, processed by said control unit, about the quantity of impurities that have accumulated on the filtering element, by means of said transmission/reception means 53 and/or by responding to an interrogation from a portable terminal or from said remote station; as a result of such signalling, the remote station can acquire the indications, processed by the control unit 50, concerning the clogging condition of the filter 1, and can accordingly decide what actions to take (notification integrated with an external application, sending of instructions to the transmission/reception means 53 and to the control unit 50 to stop the power generator before the filter 1 becomes totally clogged, and so on).

It should be noted that, for simplicity, Figures 1 and 2 respectively show just two magnetic detectors 40 (see Fig. 1) and just one magnetic detector 40 (see Fig. 2); it is however clear that the number of magnetic detectors 40 associated with the main body 10 and/or with the chamber 10A may be greater.

It should also be noted that the principle according to which it is possible to know the concentration level of the impurities on the filtering element 20 is based on the fact that the flux lines generated by the magnetic element 21 tend to go through the accumulated ferrous impurities and, when said accumulated ferrous impurities reach the magnetic detectors 40 (especially when the latter consist of magnetic switches), the circuit to which the detectors are connected will be closed, making it also possible to discriminate between different degrees of clogging.

The features of the filter 1 according to the present invention, as well as the advantages thereof, are apparent from the above description.

In fact, the provisions of the present invention allow realizing said filter 1 in such a way that it can be optimally installed in the limited space available in modern heating and cooling systems.

Furthermore, the provisions of the present invention allow providing a filter 1 that turns out to be very versatile, in that such provisions will allow an installer to easily and readily use the filter 1 with different types of power generators and in different installation configurations.

A further advantage of the filter 1 according to the present invention is that it allows an optimal removal of the impurities contained in a fluid flowing in said water supply network, while also facilitating the maintenance required for removing the residues of the impurities accumulated after the heat-transfer fluid has flowed therethrough many times.

In addition, the peculiar features of the filter 1 according to a preferred embodiment of the present invention allow realizing said filter 1 in such a way as to ensure an optimal operation thereof, since the magnetic detector 40 and the control unit 50 continuously provide the user with accurate indications about the accumulation of impurities on the filtering element 20. It is therefore apparent that the user, thanks to such indications, is put in a condition to know and understand when maintenance is necessary for removing the impurities from the filtering element 20 and to readily take action in order to restore the filter 1 to its optimal operating condition.

It should be noted that by realizing the filter 1 in such a way that it comprises a plurality of magnetic detectors 40 associated with said main body 10, in particular said magnetic detectors 30 being positioned at different distances from said at least one magnetic element 21 of the filtering element 20, a more accurate and reliable indication can be obtained as concerns the quantity of impurities that have accumulated on the filtering element 20.

## Claims

1. Filter (1) for treating a fluid in a piping of a heating and/or cooling system, in particular for household and/or industrial use, said filter (1) comprising:
- a main body (10) comprising at least one internal chamber (10A);
- a filtering element (20) for treating the fluid, said filtering element (20) comprising at least one magnetic element (21) housed at least partially in said chamber (10A) and adapted to intercept and trap any ferrous impurities contained in the fluid to be treated,
wherein
said main body (10) comprises a first mouth (11), a second mouth (12) and a third mouth (13) having the same shape, wherein said first mouth (11), second mouth (12) and third mouth (13) comprise, respectively, a first duct (C1), a second duct (C2) and a third duct (C3) that allow the fluid to enter and/or exit the chamber (10A),
wherein a first side (11A) of the first mouth (11), a second side (12A) of the second mouth (12) and a third side (13A) of the third mouth (13) are made in the same manner in terms of dimensions and shape, wherein the first mouth (11), the second mouth (12) and the third mouth (13) comprise corresponding connection means, in particular said connection means may consist of identical threads on the sides (11A), (12A), (13A) of said first mouth (11), second mouth (12) and third mouth (13),
wherein said main body (10) has a substantially cylindrical shape, the first mouth (11) and the third mouth (13) being positioned on the side surface of the main body (10), whereas the second mouth (12) is positioned at one end of the substantially cylindrical main body (10),
wherein the first mouth (11) and the third mouth (13) are positioned on the main body (10) on opposite sides relative to the chamber (10A) and in such a way as to have first longitudinal axes (X) substantially coinciding with each other,
and wherein the second mouth (12) is positioned on the main body (10) in such a way as to have a second longitudinal axis (Y) substantially perpendicular to the first longitudinal axes (X) of the first mouth (11) and third mouth (13).

2. Filter (1) according to claim 1 **characterized in that** the first mouth (11), the second mouth (12) and the third mouth (13) are positioned on the main body (10) in such a way as to lie in substantially the same longitudinal plane, said longitudinal plane being parallel to a longitudinal axis (A-A) of the filter (1).

3. Filter (1) according to one or more of the preceding claims, **characterized in that** the first mouth (11), the second mouth (12) and the third mouth (13) are positioned on the main body (10) in such a way that the ratio between:
- a first distance (A), measured between the second axis (Y) and a straight line passing through a first inlet section (11B) of the first mouth (11), and
- a second distance (B), measured between the first axis (X) and a straight line passing through a second inlet section (12B) of the second mouth (12),
lies within a range of values from a minimum value of 0.8 to a maximum value of 1.2, in particular said first distance (A) and second distance (B) being shorter than 50 mm.

4. Filter (1) according to claim 1, **characterized in that** said filtering element (20) comprises a plurality of magnetic elements (21), in particular associated with one another in such a way as to form a substantially rod-like shape.

5. Filter (1) according to claim 4, **characterized in that** said filtering element (20) comprises the following elements:
- a magnet cartridge (22) adapted to house said plurality of magnetic elements (21);
- a plug (23) adapted to be secured to the main body (10);
- a sheath (24), in particular of the removable type, adapted to house the magnet cartridge (22) and to be coupled to the plug (23).

6. Filter (1) according to claim 5, **characterized in that** the plug (23) is secured in correspondence of one end of the main body (10) opposite to that with which the second mouth (12) is associated.

7. Filter (1) according to claim 4, **characterized in that** said plurality of magnetic elements (21) is so arranged as to develop parallel to a longitudinal axis (A-A) of the filter (1).

8. Filter (1) according to one or more of the preceding claims, **characterized in that** it comprises a second filtering element (26), in particular of the mesh type, realized as to have a substantially tubular shape and positioned in the chamber (10A) for subjecting the fluid to be treated to an additional filtering action.

9. Filter (1) according to claims 5 and 8, **characterized in that** said second filtering element (26) is so positioned as to embrace or contain the assembly made up of the filtering element (20), the magnet cartridge (22) and the sheath (24).

10. Filter (1) according to claims 5 and 8, **characterized in that** said second filtering element (26) is so arranged as to surround the inlet portion of the second duct (C2) in the chamber (10A) and to extend parallel to the longitudinal axis (A-A) of the filter (1) until it comes in contact with the plug (23).

11. Filter (1) according to one or more of the preceding claims, **characterized in that** it comprises:
- at least one magnetic detector (40) associated with said main body (10) for detecting the magnetic field generated by said at least one magnetic element (21);
- a control unit (50) associated with said at least one magnetic detector (40), said control unit (50) being adapted to process the magnetic field information received from said at least one magnetic detector (40) and to provide an indication about the quantity of impurities that have accumulated on the filtering element (20).

12. Filter (1) according to claim 11, **characterized in that** it comprises a first signalling device (51) of the video type and/or a second signalling device (52) of the audio type associated with said control unit (50), wherein at least one of said signalling devices (51, 52) is activated by the control unit (50) in order to provide a user with an indication about the quantity of impurities that have accumulated on the filtering element (20).

13. Filter (1) according to one or more of the preceding claims 11 and 12, **characterized in that** it comprises a plurality of magnetic detectors (40) associated with said main body (10), in particular said magnetic detectors (40) being positioned at different distances from said at least one magnetic element (21) of the filtering element (20).

## Patentansprüche

1. Filter (1) zum Behandeln eines Fluids in einer Rohrleitung eines Heiz- und/oder Kühlsystems, insbesondere für den Haushalts- und/oder Industriegebrauch, wobei der Filter (1) umfasst:
- einen Hauptkörper (10) umfassend mindestens eine innere Kammer (10A);
- ein Filterelement (20) zum Behandeln des Fluids, wobei das Filterelement (20) mindestens ein magnetisches Element (21) umfasst, dass zumindest teilweise in der Kammer (10A) untergebracht und angepasst ist, alle eisenhaltigen Verunreinigungen, die im Fluid, das zu behandeln ist, enthalten sind, abzufangen und einzufangen,
wobei
der Hauptkörper (10) eine erste Mündung (11), eine zweite Mündung (12) und eine dritte Mündung (13) aufweist, die die gleiche Form haben,
wobei die erste Mündung (11) die zweite Mündung (12) und die dritte Mündung (13) entsprechend einen ersten Kanal (C1), einen zweiten Kanal (C2) und einen dritten Kanal (C3) aufweisen, der es dem Fluid erlaubt in die Kammer (10A) ein- oder aus der Kammer herauszutreten,
wobei eine erste Seite (11A) der ersten Mündung (11), eine zweite Seite (12A) der zweiten Mündung (12) und eine dritte Seite (13A) der dritten Mündung (13) in der gleichen Weise in Bezug auf Abmessungen und Formen hergestellt sind, wobei die erste Mündung (11), die zweite Mündung (12) und die dritte Mündung (13) entsprechende Verbindungsmittel aufweisen, wobei die Verbindungsmittel insbesondere aus identischen Gewinden an den Seiten (11A), (12A), (13A) der ersten Mündung (11), der zweiten Mündung (12) und der dritten Mündung (13) bestehen können,
wobei der Hauptkörper (10) eine im Wesentlichen zylindrische Form aufweist, die erste Mündung (11) und die dritte Mündung (13) an der Seitenfläche des Hauptkörpers (10) angeordnet sind, wobei die zweite Mündung (12) an einem Ende des im Wesentlichen zylindrischen Hauptkörpers (10) angeordnet ist,
wobei die erste Mündung (11) und die dritte Mündung (13) auf dem Hauptkörper (10) auf gegenüberliegenden Seiten relativ zur Kammer (10A) und in solcher Weise angeordnet sind, dass sie erste Längsachsen (X) aufweisen, die im Wesentlichen miteinander übereinstimmen,
und wobei die zweite Mündung (12) auf dem Hauptkörper (10) in solcher Weise angeordnet ist, dass sie eine zweite Längsachse (Y) aufweist, die im Wesentlichen senkrecht zu den ersten Längsachsen (X) der ersten Mündung (11) und der dritten Mündung (13) ist.

2. Filter (1) nach Anspruch 1, **dadurch gekennzeichnet, dass** die erste Mündung (11), die zweite Mündung (12) und die dritte Mündung (13) auf dem Hauptkörper (10) in solch einer Weise angeordnet sind, dass diese im Wesentlichen in der gleichen Längsebene liegen, wobei die Längsebene parallel zur Längsachse (A-A) des Filters (1) liegt.

3. Filter (1) nach einem der vorhergehenden Ansprüche, **dadurch gekennzeichnet, dass** die erste Mündung (11), die zweite Mündung (12) und die dritte Mündung (13) auf dem Hauptkörper (10) in solch einer Weise angeordnet sind, dass das Verhältnis zwischen:
- einer ersten Distanz (A), gemessen zwischen der zweiten Achse (Y) und einer geraden Linie, die einen ersten Einlassabschnitt (11B) der ersten Mündung (11) passiert, und
- einer zweiten Distanz (B), gemessen zwischen der ersten Achse (X) und einer geraden Linie, die einen zweiten Einlassabschnitt (12B) der zweiten Mündung (12) passiert,
innerhalb eines Bereichs von Werten mit einem Minimalwert von 0,8 bis zu einem Maximalwert von 1,2 liegt, wobei insbesondere die erste Distanz (A) und die zweite Distanz (B) kürzer als 50 mm sind.

4. Filter (1) nach Anspruch 1, **dadurch gekennzeichnet, dass** das Filterelement (20) mehrere magnetische Elemente (21) umfasst, die insbesondere miteinander in solcher Weise assoziiert sind, um eine im Wesentlichen stabförmige Form zu bilden.

5. Filter (1) nach Anspruch 4, **dadurch gekennzeichnet, dass** das Filterelement (20) die folgenden Elemente umfasst:
- eine Magnetkartusche (22), die angepasst ist, die mehreren magnetischen Elemente (21) unterzubringen;
- einen Stecker (23), der angepasst ist, um am Hauptkörper (10) gesichert zu werden;
- eine Hülle (24), insbesondere von einer abnehmbaren Art, die angepasst ist, die Magnetkartusche (22) unterzubringen und mit dem Stecker (23) verbunden zu werden.

6. Filter (1) nach Anspruch 5, **dadurch gekennzeichnet, dass** der Stecker (23) in Übereinstimmung mit einem Ende des Hauptkörpers (10) gesichert ist, das gegenüber zu dem liegt, mit dem die zweite Mündung (12) assoziiert ist.

7. Filter (1) nach Anspruch 4, **dadurch gekennzeichnet, dass** die mehreren magnetischen Elemente (21) so angeordnet sind, dass sie parallel zu einer Längsachse (A-A) des Filters (1) auftreten.

8. Filter (1) nach einem oder mehreren der vorhergehenden Ansprüche, **dadurch gekennzeichnet, dass** er ein zweites Filterelement (26), insbesondere von einer Maschenart, umfasst, das realisiert ist, um eine im Wesentlichen röhrenförmige Form aufzuweisen, und das in der Kammer (10A) angeordnet ist, um das zu behandelnde Fluid einer zusätzlichen Filterwirkung zu unterziehen.

9. Filter (1) nach Ansprüchen 5 und 8, **dadurch gekennzeichnet, dass** das zweite Filterelement (26) so angeordnet ist, dass es die Anordnung, die aus dem Filterelement (20), der Magnetkartusche (22) und der Hülse (24) besteht, umschließt oder enthält.

10. Filter (1) nach Ansprüchen 5 und 8, **dadurch gekennzeichnet, dass** das zweite Filterelement (26) so angeordnet ist, dass es den Einlassteil des zweiten Kanals (C2) in die Kammer (10A) umgibt und sich parallel zur Längsachse (A-A) des Filters (1) erstreckt, bis es in Kontakt mit dem Stecker (23) kommt.

11. Filter (1) nach einem oder mehreren der vorhergehenden Ansprüche, **dadurch gekennzeichnet, dass** er umfasst:
- mindestens einen Magnetdetektor (40), der mit dem Hauptkörper (10) assoziiert ist, zum Detektieren des magnetischen Feldes, das durch das mindestens eine magnetische Element (21) erzeugt wird;
- Steuereinheit (50), die mit dem mindestens einen Magnetdetektor (40) assoziiert ist, wobei die Steuereinheit (50) angepasst ist, die Magnetfeldinformationen, die von dem mindestens einen Magnetdetektor (40) empfangen wurden zu verarbeiten und eine Anzeige über die Anzahl der Verunreinigungen, die sich auf dem Filterelement (20) angesammelt haben, bereitzustellen.

12. Filter (1) nach Anspruch 1, **dadurch gekennzeichnet, dass** er eine erste Signalisierungsvorrichtung (51) der Videoart und/oder einer zweiten Signalisierungsvorrichtung (52) der Audioart aufweist, die mit der Steuereinheit (50) assoziiert sind, wobei mindestens eine der Signalisierungsvorrichtungen (51, 52) durch die Steuereinheit (50) aktiviert wird, um einem Verwender eine Anzeige über die Anzahl der Verunreinigungen, die sich auf dem Filterelement (20) angesammelt haben, bereitzustellen.

13. Filter (1) nach einem oder mehreren der vorhergehenden Ansprüche 11 und 12, **dadurch gekennzeichnet, dass** er mehrere Magnetdetektoren (40), die mit dem Hauptkörper (10) assoziiert sind, umfasst, wobei insbesondere die Magnetdetektoren (40) mit unterschiedlichen Distanzen zu dem mindestens einen magnetischen Element (21) des Filterelements (20) angeordnet sind.

## Revendications

1. Filtre (1) pour traiter un fluide dans une tuyauterie d'un système de chauffage et/ou de refroidissement, en particulier pour un usage domestique et/ou industriel, ledit filtre (1) comprenant :
- un corps principal (10) comprenant au moins une chambre interne (10A) ;
- un élément de filtrage (20) pour traiter le fluide, ledit élément de filtrage (20) comprenant au moins un élément magnétique (21) reçu au moins partiellement dans ladite chambre (10A) et adapté pour intercepter et piéger toute impureté ferreuse contenue dans le fluide devant être traité,
ledit corps principal (10) comprenant une première ouverture (11), une deuxième ouverture (12) et une troisième ouverture (13) ayant la même forme,
ladite première ouverture (11), ladite deuxième ouverture (12) et ladite troisième ouverture (13) comprenant, respectivement, un premier conduit (C1), un deuxième conduit (C2) et un troisième conduit (C3) qui permettent au fluide d'entrer dans la chambre (10A) et/ou de sortir de celle-ci,
un premier côté (11A) de la première ouverture (11), un deuxième côté (12A) de la deuxième ouverture (12) et un troisième côté (13A) de la troisième ouverture (13) étant réalisés de la même manière en termes de dimensions et de forme, la première ouverture (11), la deuxième ouverture (12) et la troisième ouverture (13) comprenant des moyens de raccordement correspondants, en particulier lesdits moyens de raccordement pouvant se composer de filetages identiques sur les côtés (11A),(12A),(13A) de ladite première ouverture (11), de ladite deuxième ouverture (12) et de ladite troisième ouverture (13),
ledit corps principal (10) ayant une forme sensiblement cylindrique, la première ouverture (11) et la troisième ouverture (13) étant positionnées sur la surface latérale du corps principal (10), tandis que la deuxième ouverture (12) est positionnée à une extrémité du corps principal sensiblement cylindrique (10),
la première ouverture (11) et la troisième ouverture (13) étant positionnées sur le corps principal (10) sur des côtés opposés par rapport à la chambre (10A) et de telle manière à avoir des premiers axes longitudinaux (X) coïncidant sensiblement l'un avec l'autre,
et la deuxième ouverture (12) étant positionnée sur le corps principal (10) de telle manière à avoir un second axe longitudinal (Y) sensiblement perpendiculaire aux premiers axes longitudinaux (X) de la première ouverture (11) et de la troisième ouverture (13).

2. Filtre (1) selon la revendication 1, **caractérisé par le fait que** la première ouverture (11), la deuxième ouverture (12) et la troisième ouverture (13) sont positionnées sur le corps principal (10) de telle manière à se trouver sensiblement dans le même plan longitudinal, ledit plan longitudinal étant parallèle à un axe longitudinal (A-A) du filtre (1).

3. Filtre (1) selon une ou plusieurs des revendications précédentes, **caractérisé par le fait que** la première ouverture (11), la deuxième ouverture (12) et la troisième ouverture (13) sont positionnées sur le corps principal (10) de telle manière que le rapport entre :
- une première distance (A), mesurée entre le second axe (Y) et une ligne droite passant par une première section d'entrée (11B) de la première ouverture (11), et
- une seconde distance (B), mesurée entre le premier axe (X) et une ligne droite passant par une seconde section d'entrée (12B) de la deuxième ouverture (12),
se trouve dans une plage de valeurs allant d'une valeur minimale de 0,8 à une valeur maximale de 1,2, en particulier ladite première distance (A) et ladite seconde distance (B) étant inférieures à 50 mm.

4. Filtre (1) selon la revendication 1, **caractérisé par le fait que** ledit élément de filtrage (20) comprend une pluralité d'éléments magnétiques (21), en particulier associés les uns aux autres de telle manière à définir une forme sensiblement en forme de tige.

5. Filtre (1) selon la revendication 4, **caractérisé par le fait que** ledit élément de filtrage (20) comprend les éléments suivants :
- une cartouche d'aimants (22) adaptée pour recevoir ladite pluralité d'éléments magnétiques (21) ;
- un bouchon (23) adapté pour être fixé au corps principal (10) ;
- une gaine (24), en particulier du type amovible, adaptée pour recevoir la cartouche d'aimants (22) et pour être couplée au bouchon (23).

6. Filtre (1) selon la revendication 5, **caractérisé par le fait que** le bouchon (23) est fixé en correspondance d'une extrémité du corps principal (10) opposée à celle à laquelle la deuxième ouverture (12) est associée.

7. Filtre (1) selon la revendication 4, **caractérisé par le fait que** ladite pluralité d'éléments magnétiques (21) est disposée de façon à se développer parallèlement à un axe longitudinal (A-A) du filtre (1).

8. Filtre (1) selon une ou plusieurs des revendications précédentes, **caractérisé par le fait qu'**il comprend un second élément de filtrage (26), en particulier du type à mailles, réalisé de façon à avoir une forme sensiblement tubulaire et positionné dans la chambre (10A) pour soumettre le fluide devant être traité à une action de filtrage supplémentaire.

9. Filtre (1) selon les revendications 5 et 8, **caractérisé par le fait que** ledit second élément de filtrage (26) est positionné de façon à englober ou contenir l'ensemble composé de l'élément de filtrage (20), de la cartouche d'aimants (22) et de la gaine (24).

10. Filtre (1) selon les revendications 5 et 8, **caractérisé par le fait que** ledit second élément de filtrage (26) est disposé de façon à entourer la partie d'entrée du deuxième conduit (C2) dans la chambre (10A) et s'étendre parallèlement à l'axe longitudinal (A-A) du filtre (1) jusqu'à ce qu'il entre en contact avec le bouchon (23).

11. Filtre (1) selon une ou plusieurs des revendications précédentes, **caractérisé par le fait qu'**il comprend :
- au moins un détecteur magnétique (40) associé audit corps principal (10) pour détecter le champ magnétique généré par ledit au moins un élément magnétique (21) ;
- une unité de commande (50) associée audit au moins un détecteur magnétique (40), ladite unité de commande (50) étant adaptée pour traiter les informations de champ magnétique reçues dudit au moins un détecteur magnétique (40) et pour fournir une indication sur la quantité d'impuretés qui se sont accumulées sur l'élément de filtrage (20).

12. Filtre (1) selon la revendication 1, **caractérisé par le fait qu'**il comprend un premier dispositif de signalisation (51) du type vidéo et/ou un second dispositif de signalisation (52) du type audio associé à ladite unité de commande (50), au moins un desdits dispositifs de signalisation (51, 52) étant activé par l'unité de commande (50) afin de fournir, à un utilisateur, une indication sur la quantité d'impuretés qui se sont accumulées sur l'élément de filtrage (20).

13. Filtre (1) selon une ou plusieurs des revendications précédentes 11 et 12, **caractérisé par le fait qu'**il comprend une pluralité de détecteurs magnétiques (40) associés audit corps principal (10), en particulier lesdits détecteurs magnétiques (40) étant positionnés à différentes distances dudit au moins un élément magnétique (21) de l'élément de filtrage (20).
